# EUROPEAN PATENT APPLICATION

(11) **EP 4 832 658 A1**
(43) Date of publication of application: **28.10.2026**
(21) Application number: 25171627.0
(22) Date of filing: 22.04.2025
(51) Int. Cl.: H05B 1/02, B60H 1/22

(54) **METHOD FOR OPERATING A HEATING DEVICE IN AN ELECTRIC VEHICLE AND HEATING DEVICE**

(71) Applicant: Borgwarner Inc., Auburn Hills, Michigan 48326 (US)
(72) Inventor: Pais Fagín, Pablo, 36315 Vigo (ES); Airado Vilar, Nerea, 36315 Vigo (ES)
(74) Representative: Twelmeier Mommer & Partner

(57) **Abstract**

Disclosed is a method for operating a heating device in an electric vehicle, said heating device comprising a high side transistor switch (HSS) arranged between a positive terminal (HV+) connected to a voltage source of the vehicle and a branching point (B), said branching point (B) connecting a first branch, which comprises a heating resistor (R) and a low side transistor switch (LSS), and a second branch comprising a capacitor (C). Before heating is started, the capacitor (C) is charged gradually by keeping the low side transistor (LSS) open and controlling the high side transistor (HSS) to create pulses during which the capacitor (C) is electrically connected to the voltage source of the vehicle. Also disclosed is a heating device.

## Description

The invention refers to a method for operating a heating device in an electric vehicle and to a heating device for an electric vehicle.

Electric vehicles usually have a high voltage on-board power system, e.g. in the range of 400 V to 800 V. Heating devices in electric vehicles are therefore operated at high voltages. Heating power is adjusted by pulse width modulation according to heating demand. For reasons of electromagnetic compatibility such heating devices usually comprise a filter capacitor.

When the capacitor is completely discharged, e.g. at the start of driving after the vehicle has been parked, activation of the heating device may lead to inrush currents. An object of the present invention is to provide a cost-efficient way to avoid damages caused by inrush currents.

This object is solved by a method according to claim 1 and a heating device according to claim 11. Advantageous refinements of the invention are the matter of dependent claims.

According to the present invention, the capacitor of the heating device is connected to a voltage source of the vehicle during pulses and thereby charged gradually before heating is started. Heating is started and voltage applied to the heating resistor only after the capacitor has been charged to a predefined level sufficient to avoid damages that may otherwise be caused by inrush currents. By charging the capacitor to a predefined level by means of applying a pulse width modulated voltage harmful effects of inrush currents can be avoided or at least significantly limited.

The method of the present invention is used for operating a heating device in an electric vehicle, said heating device comprises a high side transistor switch arranged in a conduction path leading from a positive terminal, which is connected to a voltage source of the vehicle, to a branching point, said branching point electrically connects a first branch, which comprises a heating resistor and a low side transistor switch, and second branch comprising the capacitor. Thus, the low side switch and the high side switch are arranged in series with the heating resistor between them and voltage is applied to the heating resistor only if both the high side transistor switch and the low side transistor switch are in a conducting state.

The transistor switches may, e.g., be MOSFETs or IGBTs. The heating device may contain additional branches and additional components, especially additional transistor switches.

In order to apply a pulse width modulated voltage to the capacitor, the high side transistor switch is activated, i.e. the capacitor is connected via the high side transistor switch to the voltage source of the vehicle. At the end of each pulse, the high side transistor is switched off. While the capacitor is charged by current flowing through the high side transistor switch, heating is avoided by the low side transistor switch that is also arranged in the first branch and kept open. As long as the low side transistor switch is open, no voltage differential is applied to the resistor, even if the high side transistor switch is in a conducting state, e.g. closed or in linear mode.

Transistor switches have three switch states, namely switched off, switched on (sometimes also called saturation mode), and linear mode. If the transistor is switched off, it insulates input and output from each other (in MOSFETs, input and output are also called drain and source, respectively). If the transistor is switched on or fully activated, input and output are electrically connected and the transistor has only a negligible resistance. In linear mode, the transistor is operated partially on rather than fully on or fully off, i.e. has a significant resistance.

In an advantageous refinement of the invention, the high side transistor switch is operated in linear mode during the pulses charging the capacitor before heating is started. Thereby the transistor's resistance limits the inrush current during the pulses. In pauses between pulses the transistor switch can cool to avoid overheating. By keeping the pulses short enough, almost any transistor switch, especially any IGBT, may be used without being damaged. How short the pulses need to be, depends on the characteristics of the specific transistor used.

Some manufacturers offer transistors that are specifically adapted for extended operation in linear mode. However, such transistors are not necessary for the present invention. If the pulses are short enough, any transistor can be operated in pulse linear mode.

In a further refinement of the invention, the high side transistor switch is operated in a pulsed linear mode by a control unit that applies triangular shaped voltage pulses to the gate of this transistor switch. The triangular shaped pulses have a peak voltage at or slightly above the transistor's threshold voltage, e.g. up to 10 % above threshold voltage. The transistor switch enters linear mode as soon as the gate voltage is above the threshold voltage and opens as soon as the gate voltage drops below the threshold voltage. A triangular voltage, i.e. a voltage that rises linearly with time until a maximum is reached and then drops linearly with time, allows more precise control of the duration of the time during which the transistor is in linear mode. It is also possible to operate the transistor switch connecting the capacitor to the vehicle's voltage source in pulsed linear mode by applying rectangular pulses to its gate.

As soon as the capacitor is sufficiently charged, inrush current is no longer a problem. Voltage may then be applied to the heating resistor according to heating demand and the high side transistor switch may be fully activated, i.e. switched on. The low side transistor switch is then actuated according to heating demand, i.e. either switched on or off.

Until the capacitor is charged to a predefined threshold, the high side transistor switch is actuated to define the pulses during which the capacitor is charged, i.e. connected to a voltage source of the vehicle. When the capacitor's charging state is above the predefined threshold the low side transistor switch is used to control heating power by pulse width modulation according to heating demand. During the charging of the capacitor, until the capacitor is charged to the predefined threshold, e.g. 90%, the low side transistor switch is always fully deactivated, i.e. open. Later, when the capacitor's charging state is above the predefined threshold the high side transistor switch may always be fully activated, i.e. closed. In this way, pulse width modulation to limit inrush current effects does not interfere with pulse width modulation during normal operation when the duty cycle is determined by heating demand.

In a simple embodiment of the invention, a short pulse of e.g. 5 µs to 10 µs may be used until the capacitor is fully charged. In a refinement of the invention, the pulse duration is gradually increased with the charging of the capacitor, e.g. increased in steps, for example in steps of 1 µs to 2 µs for every 10 V potential difference between the two terminals of the capacitor or whenever the rate of change of the voltage is less than 10 V/ms. In this way, the capacitor can be charged more quickly and the heating device sooner operated according to heating demand. Until the capacitor is charged to a predefined level, the duration of pulses should be chosen in view of the specifics of the various components of a specific embodiment of the invention.

A further advantageous refinement of the invention is that the capacitor's charging state is monitored by measuring a voltage differential between two terminals of the capacitor. In the alternative or additionally the rate of change of a voltage differential across the capacitor may be used. In this way, current flowing through the transistor switch connecting the capacitor to a vehicle's voltage supply system can be monitored and it can be ensured that the power dissipated in the transistor switch complies with the power dissipation specified by the manufacturer by adjusting pulse width accordingly. Moreover, by monitoring the rate of change of the voltage differential measured across the transistor switch any anomalies in the charging process, such as a sudden increase in current, can be easily detected and pulse width adjusted accordingly to protect the system.

A heating device according to the invention comprises a positive terminal, a negative terminal, a heating resistor, a high side transistor switch, a low side transistor switch, and a capacitor. The high side transistor switch is arranged between the positive terminal and a branching point connecting a first branch, which comprises the heating resistor and the low side transistor switch, and a second branch comprising the capacitor.

Thus, the capacitor bypasses the heating resistor and the low side switch, but not the high side switch. The capacitor is charged by keeping the low side switch closed and controlling the high side switch to connect the capacitor during pulses to a voltage source of a vehicle. While the low side switch is open, the high side switch can be used to define pulses for charging the capacitor without applying voltage to the heating resistor. Hence, the capacitor can be charged before heating is started. When the capacitor is sufficiently charged, voltage may be applied to the heating resistor by keeping the high side switch closed and controlling the low side switch according to heating demand.

Positive terminal, high side switch, heating resistor, low side switch and negative terminal are arranged in series in this order. One side of the capacitor is connected to the negative terminal, the other side is connected between the resistor and the high side switch, i.e. to the branching point that connects the first branch and the second branch.

A control unit, e.g. microcontroller, may be used to monitor the voltage differential across the capacitor and to operate the high side transistor switch accordingly in order to define the length of the pulses used to charge the capacitor and to determine when the capacitor is sufficiently charged and therefore heating may be started without adverse effect of inrush currents.

In an advantageous refinement of the invention, the pulses for charging the capacitor have a duration that is chosen as a function of the capacitor's charging state in order to limit inrush current effects. The duration of a pulse is the time from the beginning of a pulse to its end and sometimes also called pulse width.

The charging state of the capacitor may be monitored by measuring the voltage differential between the terminals of the capacitor. When the capacitor is completely discharged the voltage differential is zero. When the capacitor is fully charged, the voltage differential corresponds to the voltage supplied by the vehicle's on-board power system. The capacitor's charging state may also be monitored by measuring the rate of change of a voltage differential across the capacitor. The rate of change of the voltage differential across the capacitor corresponds to the current charging the capacitor. Hence, the rate of change of the voltage across the capacitor drops as the capacitor is charged.

If the duty cycle is short enough and there are sufficiently long pauses between pulses, inrush current does not necessarily cause damage. Even though the inrush current may be rather large, the energy dissipated during the pulse is then small enough to avoid problems, especially heat related problems. How short the pulses need to be and how long the pauses between pulses need to be, depends on the vehicle's voltage supply, the specifics of the transistor switch used for connecting and disconnecting the capacitor to the voltage source of the vehicle, and other details of the heating device.

Further details and advantages of the invention are described with referenced to the attached drawings. In the figures:
- Fig. 1: shows a schematic circuit diagram of a heating device; and
- Fig. 2: shows a flow chart for adapting pulse width as a function of the capacitor's charging state.

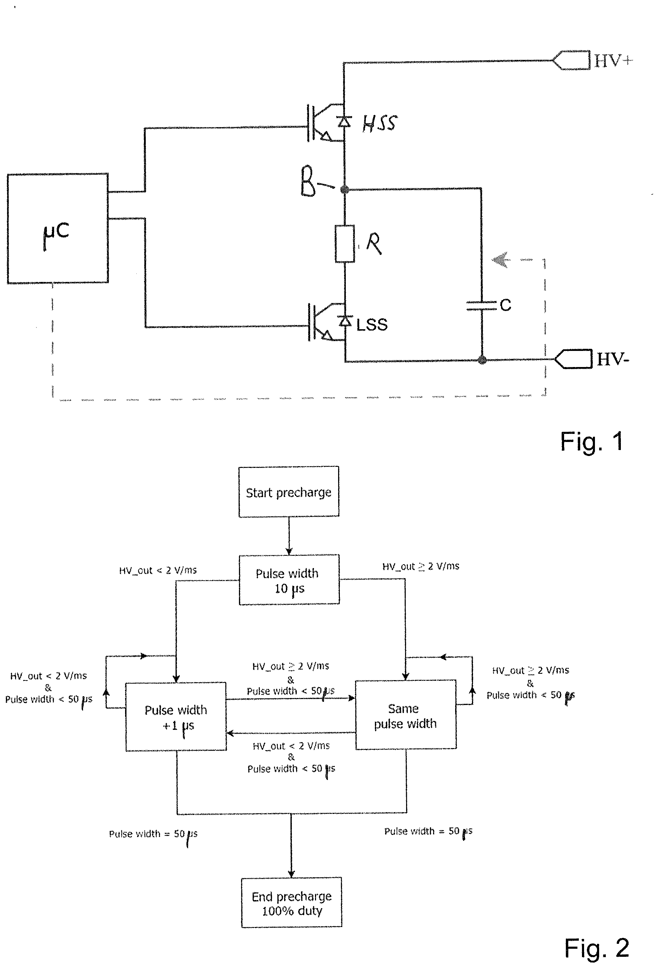

Fig. 1 shows schematically a circuit diagram of a heating device for an electric vehicle. The heating device may, e.g., be a flow heater. The circuit comprises a positive terminal HV+ and a negative terminal HV-. The terminals HV+ and HV- are connected to corresponding terminals of the vehicle's on-board voltage system, e.g. a battery providing a voltage in the range of 400 V to 900 V. The circuit also comprises a high side transistor switch HSS, a heating resistor R, a low side transistor switch LSS and a capacitor C. In the embodiment shown, the capacitor C is part of an input filter block to improve electromagnetic compatibility.

The transistor switch HSS is arranged in a conduction path leading from the positive terminal HV+ to a branching point B. The branching point B connects a first branch, which comprises the heating resistor R and the low side transistor switch LSS, and a second branch, which comprises the capacitor C. As shown in fig. 1, positive terminal HV+, high side transistor switch HSS, heating resistor R, low side transistor switch LSS, and negative terminal LSS are arranged in series. The heating resistor R is arranged between the high side transistor switch HSS and the low side transistor switch LSS. In the embodiment shown, one side of the capacitor C is directly connected to the negative terminal and the other side connected between the high side switch HSS and resistor R, namely to branching point B.

When capacitor C is completely discharged, e.g. after the vehicle has been parked for an extended time, activating high side transistor switch HSS, i.e. closing it, causes current to flow into capacitor C. If this current, also called inrush current, dissipates too much power, components of the circuit can be damaged. In order to limit inrush current effects, high side transistor switch HSS is operated by pulse width modulation such that current flows only in pulses and capacitor C is charged gradually while the low side transistor switch LSS is kept open. By limiting the duration of these pulses and keeping sufficiently large pauses between pulses, damages by inrush current can be prevented, especially if high side transistor switch HSS is not fully activated during the pulses, but operated in linear mode. Extended operation of high side transistor switch HSS in linear mode may damage the high side transistor switch HSS. Therefore, pulses are chosen to be short enough. Usually, pulses of not more than 20 µs may be used for most applications, but longer pulses may be possible depending on the voltage supplied by the vehicle's voltage source and characteristics of the specific transistor switch used in a given application.

Pulse width modulation by actuating high side transistor switch HSS while low side transistor switch stays open causes capacitor C to charge gradually without voltage being applied to heating resistor R. Thus, capacitor C can be charged to a predefined level before heating is started.

If the capacitor's charging state is below a predefined threshold, the capacitor C is connected to the voltage source during the pulses via the high side transistor switch HSS operated in linear mode, and if the capacitor's charging state is above the predefined limit, the high side transistor switch HSS is operated in fully active mode and voltage applied to the heating resistor R according to heating demand. As the high side transistor switch HSS is not operated in linear mode continuously, it may also be said to be operated in a pulsed linear mode or in linear state with pulse width control.

The charging state of capacitor C may be monitored by measuring the voltage differential across capacitor C. As soon as this voltage differential reaches a predefined threshold, e.g. 90% of the voltage differential between terminals HV+ and HV-, or the rate of change of this voltage differential falls below a predefined threshold, charging of capacitor C can be considered completed and heating resistor R may be connected to HV+ according to heating demand.

After capacitor C is charged sufficiently, inrush currents are no longer a problem and resistor R as well as capacitor C can then be connected to terminal HV+ according to heating demand by closing both low side transistor switch LSS and high side transistor switch HSS. Hence, as soon as capacitor C is sufficiently charged to avoid inrush current problems, high side transistor switch HSS may be fully activated and stay fully activated. Low side transistor switch LSS may then be used to apply voltage to heating resistor R by pulse width modulation according to heating demand. During heating operation of the heating device, low side transistor switch LSS may be either fully closed or fully open, e.g. operated in saturation mode. There is no need to operate low side transistor switch LSS in linear mode.

Fig. 2 shows a flow chart for adapting pulse width as a function of the charging state of capacitor C. Therin the charging of capacitor C after the vehicle has been parked for an extended time is called "precharge". Hence, the flow chart starts with the box "start precharge". The duration of the first pulse of the precharging process is chosen for a specific heating device for a specific supply voltage and therefore depends on the various components of the heating device and the supply voltage of the vehicle on-board power system. Initially, a short pulse width is used, e.g. a pulse width of 5 µs to 20 µs of a period of e.g. 50 µs to 500 µs.

A control unit µC, e.g. a microprocessor, monitors the rate of change of the voltage differential measured across capacitor C as indicated by a dashed line in Fig. 1. If the rate of change is above a predefined threshold, e.g. above 2 V/ms, pulse width is kept constant. If the rate of change is below the predefined threshold, pulse with and duty cycle may be increased, e.g. pulse width may be increased in steps of 1 µs to 2 µs or the duty cycle may be increased in steps of 1% to 5 %, for example. In this way, the duty cycle will eventually reach 100%. Then precharging may be considered completed and the duty cycle chosen according to heating demand.

## Claims

1. Method for operating a heating device in an electric vehicle, said heating device comprising a high side transistor switch (HSS) arranged between a positive terminal (HV+) connected to a voltage source of the vehicle and a branching point (B), said branching point (B) connecting a first branch, which comprises a heating resistor (R) and a low side transistor switch (LSS), and a second branch comprising a capacitor (C),
**characterized in that**
before heating is started, the capacitor (C) is charged gradually by keeping the low side transistor (LSS) open and controlling the high side transistor (HSS) to create pulses during which the capacitor (C) is electrically connected to the voltage source of the vehicle.

2. Method according to claim 1, wherein before heating is started, the high side transistor (HSS) is operated in linear mode during the pulses.

3. Method according to any one of the preceding claims, wherein before heating is started, the high side transistor switch (HSS) is operated in pulsed linear mode by applying triangular shaped pulses to its gate.

4. Method according to any one of the preceding claims, wherein after the capacitor (C) has been charged to a predefined threshold, heating is started by closing the high side transistor switch (HSS) and the low side transistor switch (LSS).

5. Method according to claim 4, wherein during heating the high side transistor switch (HSS) and the low side transistor switch (LSS) are operated in saturation mode.

6. Method according to any one of the preceding claims, wherein the pulses have a duration that is adapted as a function of the capacitor's charging state in order to limit inrush current effects.

7. Method according to claim 6, wherein the charging state of the capacitor (C) is monitored by measuring a voltage differential between two terminals of the capacitor (C) or a rate of change of this voltage differential.

8. Method according to any one of the preceding claims, wherein the pulses have a duration that is adapted to changes of the charging state of the capacitor (C) in steps of not more than 5 µs, preferably not more than 2 µs.

9. Method according to any one of the preceding claims, wherein the pulses have a duration that is adapted to changes of the charging state of the capacitor (C) in steps of not more than 5%, preferably not more than 2% of the period of pulse width modulation.

10. Method according to any one of the preceding claims, wherein the high side switch (HSS) is operated in linear mode to define the pulses until the capacitor (C) is charged to the predefined threshold and the high side switch (HSS) is fully activated when the low side switch (LSS) is used to control heating power.

11. Heating device comprising
a positive terminal (HV+),
a negative terminal (HV-),
a heating resistor (R),
a high side transistor switch (HSS),
a low side transistor switch (LSS), and
a capacitor (C),
wherein the high side transistor switch (HSS) is arranged between the positive terminal (HV+) and a branching point (B) connecting a first branch comprising the heating resistor (R) and a second branch comprising the capacitor (C),
**characterized in that**
the low side transistor switch (LSS) is arranged in the first branch.

12. Heating device according to claim 11 comprising a control unit (µC) monitoring the charging state of the capacitor (C) and controlling the high side transistor switch (HSS) and the low side transistor switch (LSS).
